# EUROPÄISCHE PATENTSCHRIFT

(11) **EP 2 273 638 B1**
(45) Veröffentlichungstag und Bekanntmachung des Hinweises auf die Patenterteilung: **20.04.2016**
(21) Anmeldenummer: 10006229.8
(22) Anmeldetag: 16.06.2010
(51) Int. Cl.: H02G 3/04, H02G 3/06

(54) **Klammer für Kabelkanäle zur Kaschierung von Schnittkanten**
Clip for cable channels for laminating cut edges
Pince pour canaux de câble destinée à masquer des bords de coupe

(30) Priorität: 11.07.2009 DE 202009009498 U
(43) Veröffentlichungstag der Anmeldung: 12.01.2011
(73) Patentinhaber: Tehalit GmbH, 67716 Heltersberg (DE)
(72) Erfinder: Schnurr, Richard, 66957 Vinningen (DE); Mattfeldt, Thiemo, 66484 Winterbach/Pfalz (DE)
(74) Vertreter: Nuss, Laurent

(56) Entgegenhaltungen:
- EP-A1- 0 849 851
- EP-A1- 1 229 624
- EP-A1- 1 313 191
- DE-U1-202007 006 989
- US-A1- 2009 025 957

## Beschreibung

Die vorliegende Erfindung betrifft eine Klammer für Kabelkanäle zur Kaschierung von Schnittkanten gemäß dem Oberbegriff des Anspruchs 1.

Bisher verwendet man zum Kaschieren von Schnittkanten aufeinander stoßender Kabelkanalabschnitte und den Kanalenden im Wesentlichen zwei Arten von Klammern. Die erste Art von Klammern dient zur Schnittkaschierung der Schnittkanten zweier aufeinander stoßender Kabelkanalabschnitte. Die zweite Art wird verwendet, um die Endseiten der Kabelkanäle zu kaschieren, d.h. zu bedecken. Bei der zweiten Art unterscheidet man wiederum Klammern zum Kaschieren der linken Endseite des Kabeikanals, (linksseitige Endkappen), und Klammern zum Kaschieren der rechten Endseite des Kabelkanals, (rechtsseitige Endkappen). Solche Einrichtungen zur Schnittkaschierung für Kabelkanäle sind beispielsweise in der DE 20 2007 006 989 U1, DE 234 77 94 A1, DE 295 108 36 U1 sowie in der US 5,469,893 A beschrieben.

Bei bisher bekannten Kabelkanalsystemen ist es somit notwendig, neben dem Kabelkanalgehäuse jeweils eine Klammer zum Kaschieren von Schnittkanten aufeinander stoßender Kabelkanalabschnitte sowie separate rechtsseitige und linksseitige Endkappen für die beiden Seiten eines Kabelkanalgehäuses bereitzustellen. Somit muss ein Monteur zum Anbringen eines Kabelkanalsystems in der Regel drei verschiedene Arten von Klammern mit sich führen, um ein Kabelkanalsystem ordnungsgemäß an einer vorbestimmten Fläche anbringen zu können.

Es ist vor diesem Hintergrund daher Aufgabe der vorliegenden Erfindung, die Anzahl der Klammerarten für Kabelkanäle zur Schnittkaschierung von Schnittkanten zu reduzieren und eine Klammer bereitzustellen, welche die Funktionen der bisherigen Klammern vereint.

Erfindungsgemäß wird diese Aufgabe dadurch gelöst, dass eine Klammer für Kabelkanäle zur Schnittkaschierung von Schnittkanten aufeinander stoßender Kabelkanalabschnitte und/oder deren Enden bereitgestellt wird, die eine leistenförmige Frontblende mit oberen und unteren Rastelementen zur Befestigung der Klammer an einem Leitungsführungskanal oder Kabelkanal umfasst, wobei an der Innenseite der Frontblende wenigstens ein Führungs- oder Befestigungselement zur Aufnahme einer separaten Seitenblende ausgebildet ist.

Die erfindungsgemäße Klammer hat den Vorteil, dass sie einerseits ohne Seitenblende als Schnittkaschierung von Schnittkanten aufeinander stoßender Kabelabschnitte und andererseits zusammen mit einer Seitenblende zur Kaschierung der Enden eines Kabelkanals verwendet werden kann. Hierdurch wird die Anzahl der notwendigen Klammerarten, die zum Montieren eines Kabelkanalsystems notwendig sind, reduziert.

Bei einer vorteilhaften Weiterbildung der erfindungsgemäßen Klammer sind an der Innenseite der Frontblende zwei Führungs- Befestigungselemente symmetrisch angeordnet, in denen die separate Seitenblende wenigstens für einen links- oder rechtsseitigen Abschluss eines Kabelkanalabschnitts einsetzbar ist. Auf diese Weise ist es möglich, dass die erfindungsgemäße Klammer sowohl als Abschluss für einen linksseitigen als auch rechtsseitigen Gehäuseabschnitt, d.h. als linksseitige oder rechtsseitige Endkappe, verwendet werden kann.

Es ist bevorzugt, dass am Kopfende der Seitenblende ein verjüngter Führungs- oder Befestigungssteg ausgebildet ist. Der Führungs- oder Befestigungssteg ermöglicht eine einfache Befestigung der Seitenblende an der Frontblende.

Weiter ist es bevorzugt, dass die Seitenblende an dem Führungs- oder Befestigungselement mit der Frontblende verklebt, verschweißt, verlötet, verrastet, verschraubt oder verklemmt ist, wodurch auf einfache Weise eine stabile Endkappe für ein Kabelkanalende hergestellt wird.

Es ist bevorzugt, dass die Führungs- oder Befestigungselemente aus einer Doppelwand mit einer zentralen Nut bestehen. Somit kann der Führungs- oder Befestigungssteg der Seitenblende in die zentrale Nut eingesteckt oder hineingeschoben und einfach an dem Führungs- oder Befestigungselement befestigt werden.

Hierbei ist es von Vorteil, wenn der Führungs- oder Befestigungssteg ein trapezförmiges Halteprofil besitzt und die Nut an der Rückseite trapezförmig hinterschnitten ist. Auf diese Weise ist die Seitenblende ohne zusätzliche Befestigungsmittel an der Frontblende befestigbar.

Bei einer bevorzugten Weiterbildung sind an der Innenseite der Frontblende Nasen ausgebildet, welche mit pässgenauen Öffnungen an der Unterseite der Seitenblende formschlüssig kooperieren. Dies ermöglicht eine zusätzliche und somit sehr sichere Befestigung der Seitenblende an der Frontblende.

Es ist ferner von Vorteil, dass die Nasen zweireihig ausgebildet sind, so dass die Seitenblende wechselseitig für einen links- oder rechtsseitigen Abschluss eines Kabelkanalabschnitts einsetzbar ist. Hierdurch wird gewährleistet, dass eine erfindungsgemäß hergestellte Endkappe sowohl für den rechts- als auch den linksseitigen Einsatz eine sichere Verbindung zwischen der Seitenblende und der Frontblende aufweist.

Weiterhin ist bevorzugt, dass die Frontblende am Kopfende eine abgewinkelte Haube umfasst. Hierbei kann das Führungs- oder Befestigungselement beispielsweise einstückig an der Haube ausgebildet sein. Auf diese Weise ist eine besonders einfache Herstellung der erfindungsgemäßen Klammer möglich.

Ferner wird ein Kabelkanal beansprucht, der ein Unterteil und ein Oberteil umfasst, wobei zur Schnittkaschierung aufeinander stoßender Kabelkanalabschnitte oder an deren Enden eine erfindungsgemäße Klammer angebracht ist.

Bevorzugte Ausführungsformen der Erfindung werden anhand der beiliegenden Zeichnungen beschrieben, in denen zeigen:
- Fig. 1: eine erste Ausführungsform der Innenseite einer Klammer und einer Seitenblende in einer perspektivischen Ansicht;
- Fig. 2: eine weitere perspektivische Ansicht der Außenseite der Klammer und der Seitenblende von Figur 1, wobei in dieser Ansicht die Unterseite der Seitenblende zu erkennen ist;
- Fig. 3: eine zweite Ausführungsform der erfindungsgemäßen Klammer und der Seitenblende in perspektivischer Ansicht;

- Fig. 4: eine dritte Ausführungsform der erfindungsgemäßen Klammer und der Seitenblende in perspektivischer Ansicht;
- Fig. 5: die Verwendung der erfindungsgemäßen Klammer als linksseitige Endkappe;
- Fig. 6: die Verwendung der erfindungsgemäßen Klammer als rechtsseitige Endkappe; und
- Fig. 7: die Verwendung der erfindungsgemäßen Klammer als Schnittkaschierung von Schnittkanten aufeinander stoßender Kabelkanalabschnitte.

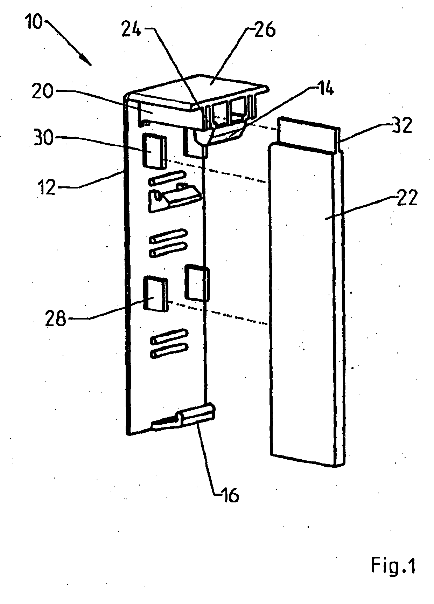

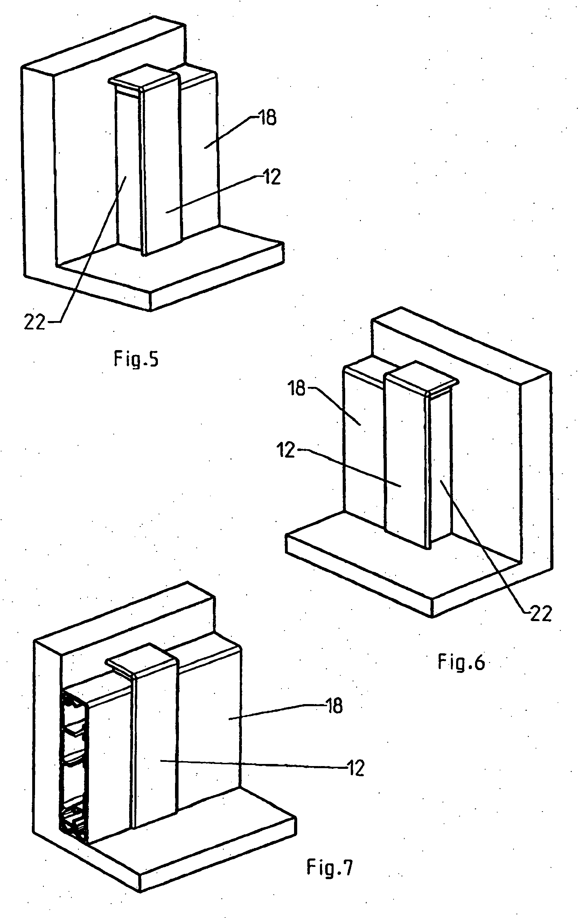

Fig. 1 zeigt eine Klammer 10 für Kabelkanäle zur Schnittkaschierung von Schnittkanten aufeinander stoßender Kabelkanalabschnitte und/oder deren Enden. Die Klammer 10 umfasst eine leistenförmige Frontblende 12 mit einer oberen Rastnase 14 und einer unteren Rastnase 16 zur Befestigung der Klammer 10 an einem in den Figuren 5 bis 7 dargestellten Kabelkanal 18.

An der Innenseite der Frontplatte 12 sind zwei Führungs- oder Befestigungselemente 20 zur Aufnahme einer separaten Seitenblende 22 ausgebildet. Die beiden Führungs- oder Befestigungselemente 20 sind symmetrisch angeordnet, so dass die Seitenblende 22 sowohl für einen links- oder rechtsseitigen Abschluss eines Kabelkanalabschnittes einsetzbar ist.

Jedes Führungs- oder Befestigungselement 20 besteht aus einer Doppelwand mit einer zentralen Nut 24, wobei jedes Führungs- oder Befestigungselement 20 so angeordnet ist, dass die Nut 24 im Wesentlichen senkrecht zur Frontblende 12 ausgerichtet ist. Weiterhin ist an einem Ende der Frontblende 10 senkrecht zur Frontblende 12 eine Haube 26 mit der Frontblende 12 fest verbunden. Die Führungs- oder Befestigungselemente 20 sind ebenfalls mit der Haube 26 fest verbunden. In dem dargestellten Ausführungsbeispiel sind die Führungs- oder Befestigungselemente 20 einstückig mit der Haube ausgebildet. Das obere Rastelement 14 ist zwischen den beiden Führungs- oder Befestigungselementen 20 angeordnet und an der unteren Längsseite der jeweiligen innen liegenden Doppelwand der Führungs- oder Befestigungselemente 20 befestigt.

Weiterhin sind an der Frontblende 12 Nasen 28, 30 ausgebildet. Die Nasen 28, 30 sind in der gezeigten Ausführungsform paarweise angeordnet.

Die Seitenblende 22 verfügt an ihrem Kopfende über einen verjüngten Führungs- oder Befestigungssteg 32. Der Führungs- oder Befestigungssteg 32 ist so ausgebildet, dass er in die Nut 24 eines Führungs- oder Befestigungselement 20 einfügbar ist. Zum Befestigen der Seitenbtende 22 an dem Führungs- oder Befestigungselement 12 kann der Führungs- oder Befestigungssteg 32 in der Nut 24 mit dem Führungs- oder Befestigungselement verklebt oder verklemmt werden.

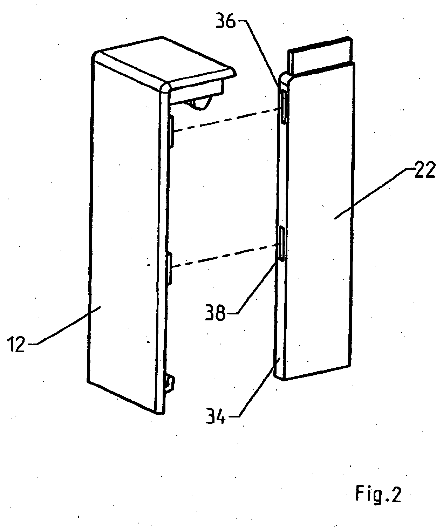

In Fig. 2 ist zu erkennen, dass die Seitenblende 22 an ihrer Unterseite 34 zwei Öffnungen 36 und 38 aufweist. Jede Öffnung 36 ist so gestaltet, dass sie eine Nase 28, 30 passgenau in sich aufnehmen kann. Auf diese Weise kann die Seitenblende 22 zusätzlich an der Frontblende 12 befestigt werden.

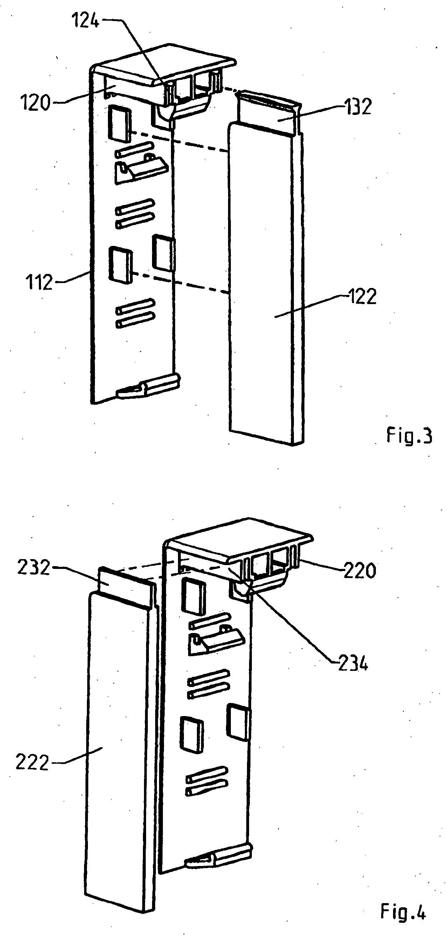

Fig. 3 zeigt eine zweite Ausführungsform der vorliegenden Erfindung, die sich von der ersten Ausführungsform dadurch unterscheidet, dass die Nut 124 des Führungs- oder Befestigungselement 120 an ihrer Rückseite trapezförmig hinterschnitten ist. Die Seitenblende 122 weist einen Führungs- oder Befestigungssteg 132 mit einem trapezförmigen Halteprofil auf. Bei dieser Ausführungsform kann der Führungs- oder Befestigungssteg 132 der Seitenblende 122 in die Nut 124 der Frontblende 112 hineingeschoben werden. Bei dieser Anordnung wird ein Herausfallen der Seitenblende 122, insbesondere des Führungs- oder Befestigungsstegs 132, aus der Nut 124 nach unten verhindert.

Fig. 4 zeigt eine dritte Ausführungsform der vorliegenden Erfindung, die sich von den beiden vorhergehenden Ausführungsformen dadurch unterscheidet, dass der Führungs- oder Befestigungssteg 232 an einer Außenwand 234 eines Führungs- oder Befestigungselements 220 befestigt wird. Beispielsweise kann die Seitenblende 222, insbesondere der Führungs- oder Befestigungssteg 232, an die Außenwand 234 des Führungs- oder Befestigungselements 220 geklebt werden. Alternativ kann eine Rastvorrichtung vorgesehen sein.

Bei allen dargestellten Ausführungsformen kann die Klammer 10 zur Kaschierung von Schnittkanten aufeinander stoßender Kabelkanalabschnitte verwendet werden. Soll die Klammer als Endkappe für einen rechtsseitigen oder linksseitigen Abschluss eines Kabelkanalabschnittes dienen, wird die Seitenblende auf eine der oben dargestellten Art und Weisen mit der Frontblende verbunden und an dieser befestigt. Hierbei ermöglicht die symmetrische Anordnung der beiden Führungs- oder Befestigungselemente, dass eine Klammer verwendet werden kann, um sowohl eine linksseitige als auch eine rechtsseitige Endkappe herzustellen.

In Fig. 5 wird die Verwendung der erfindungsgemäßen Klammer als rechtsseitige Endkappe dargestellt. Fig. 6 zeigt die erfindungsgemäße Klammer in ihrer Funktion als linksseitige Endkappe und Fig. 7 stellt die erfindungsgemäße Klammer als Schnittkaschierung von einer Schnittkante aufeinander stoßender Kabelkanalabschnitte 18 dar.

Bei den dargestellten Ausführungsformen wurden verschiedene Beispiele gezeigt, wie der Führungs- oder Befestigungssteg an dem Führungs- oder Befestigungselement befestigt sein kann. Diese Aufzählung ist jedoch nicht abschließend. Im Rahmen der Erfindung ist es beispielsweise auch möglich, dass der Führungs- oder Befestigungssteg an den Führungs- oder Befestigungselement verschweißt, verlötet, verrastet, verschraubt oder verklemmt ist, um eine rechts- oder linksseitige Endkappe zu bilden.

Für manche Anwendungszwecke kann es sinnvoll sein, wenn die Seitenblende an wenigstens einer Seite verspiegelt oder mit einer vordefinierten Farbe versehen ist.

## Patentansprüche

1. Klammer für Kabelkanäle zur Schnittkaschierung von Schnittkanten aufeinander stoßender Kabelkanalabschnitte und/oder deren Enden, umfassend:
- eine leistenförmige Frontblende (12; 112) mit oberen und unteren Rastelementen (14, 16) zur Befestigung der Klammer an einen Leitungsführungskanal oder Kabelkanal (18),
**dadurch gekennzeichnet, dass** an der Innenseite der Frontblende (12; 112) wenigstens ein Führungs- oder Befestigungselement (20; 120; 220) zur Aufnahme einer separaten Seitenblende (22; 122; 222) ausgebildet ist.

2. Klammer nach Anspruch 1, **dadurch gekennzeichnet, dass** an der Innenseite der Frontblende (12; 112) zwei Führungs- oder Befestigungselemente (20; 120; 220) symmetrisch angeordnet sind, in denen die separate Seitenblende (12; 122; 222) wechselseitig für einen links- oder rechtsseitigen Abschluss eines Kabelkanalabschnittes einsetzbar ist.

3. Klammer nach Anspruch 1 oder 2, **dadurch gekennzeichnet, dass** am Kopfende der Seitenblende (22; 122; 222) ein verjüngter Führungs- oder Befestigungssteg (32; 132; 232) ausgebildet ist.

4. Klammer nach einem der Ansprüche 1 bis 3, **dadurch gekennzeichnet, dass** die Seitenblende (22; 122; 222) an dem Führungs- oder Befestigungselement (20; 120; 220) mit der Frontblende (12; 112) verklebt, verschweißt, verlötet, verrastet, verschraubt oder verklemmt ist.

5. Klammer nach einem der Ansprüche 1 bis 4, **dadurch gekennzeichnet, dass** die Führungs- oder Befestigungselemente (20; 120; 220) aus einer Doppelwand mit einer zentralen Nut (24; 124) bestehen.

6. Klammer nach einem der Ansprüche 4 oder 5, **dadurch gekennzeichnet, dass** der Führungs- oder Befestigungssteg (132) ein trapezförmiges Halteprofil besitzt und die Nut (124) an der Rückseite trapezförmig hinterschnitten ist.

7. Klammer nach Anspruch 6, **dadurch gekennzeichnet, dass** an der Innenseite der Frontblende (12; 112) Nasen (28, 30) ausgebildet sind, welche mit passgenauen Öffnungen (36, 38) an der Unterseite der Seitenblende (22; 122; 222) formschlüssig kooperieren.

8. Klammer nach Anspruch 7, **dadurch gekennzeichnet, dass** die Nasen (28, 30) zweireihig ausgebildet sind, so dass die Seitenblende (22; 122; 222) wechselseitig für einen links- oder rechtsseitigen Abschluss eines Kabelkanalabschnittes einsetzbar ist.

9. Klammer nach einem der Ansprüche 1 bis 8, **dadurch gekennzeichnet, dass** die Frontblende (12; 112) am Kopfende eine abgewinkelte Haube (26) umfasst.

10. Klammer nach einem der Ansprüche 1 bis 9, **dadurch gekennzeichnet, dass** die Seitenblende (22; 122; 222) an wenigstens einer Seite verspiegelt ist.

11. Kabelkanal, umfassend ein Unterteil und ein Oberteil, **dadurch gekennzeichnet, dass** zur Schnittkaschierung aufeinander stoßender Kabelkanalabschnitte und/oder an deren Enden eine Klammer nach einem der Ansprüche 1 bis 10 angebracht ist.

## Claims

1. Bracket for cable ducts for concealing cut edges on abutting cable duct sections and/or their ends, comprising:
- a strip-like front plate (12; 112) with upper and lower latching elements (14, 16) for fastening the bracket to a wiring duct or cable duct (18),
**characterized in that** at least one guide or fastening element (20; 120; 220) for receiving a separate side plate (22; 122; 222) is formed on the inner side of the front plate (12; 112).

2. Bracket according to Claim 1, **characterized in that** the inside of the front plate (12; 112) has symmetrically arranged thereon two guide or fastening elements (20; 120; 220) in which the separate side plate (12; 122; 222) can be alternatively inserted for left-side or right-side closure of a cable duct section.

3. Bracket according to Claim 1 or 2, **characterized in that** a tapered guide or fastening web (32; 132; 232) is formed at the head end of the side plate (22; 122; 222).

4. Bracket according to one of Claims 1 to 3, **characterized in that** the side plate (22; 122; 222) is adhesively bonded, welded, soldered, latched, screwed or clamped with the front plate (12; 112) at the guide or fastening element (20; 120; 220).

5. Bracket according to one of Claims 1 to 4, **characterized in that** the guide or fastening elements (20; 120; 220) comprise a double wall with a central groove (24; 124).

6. Bracket according to either of Claims 4 and 5, **characterized in that** the guide or fastening web (132) has a trapezoidal holding profile and the groove (124) is undercut trapezoidally at the rear side.

7. Bracket according to Claim 6, **characterized in that** the inner side of the front plate (12; 112) has lugs (28, 30) formed thereon which cooperate positively with precisely fitting openings (36, 38) on the underside of the side plate (22; 122; 222).

8. Bracket according to Claim 7, **characterized in that** the lugs (28, 30) are formed in two rows, with the result that the side plate (22; 122; 222) can be alternatively used for left-side or right-side closure of a cable duct section.

9. Bracket according to one of Claims 1 to 8, **characterized in that** the front plate (12; 112) comprises an angled-off cover (26) at the head end.

10. Bracket according to one of Claims 1 to 9, **characterized in that** the side plate (22; 122; 222) is mirrored on at least one side.

11. Cable duct, comprising a lower part and an upper part, **characterized in that** a bracket according to one of Claims 1 to 10 is mounted in order to conceal cuts on abutting cable duct sections and/or on their ends.

## Revendications

1. Attache pour caniveaux de câbles destinée à masquer les bords de coupe de tronçons de caniveau de câbles qui se touchent et/ou leurs extrémités, comprenant :
- un cache avant (12 ; 112) en forme de barrette avec des éléments d'encliquetage supérieur et inférieur (14, 16) pour fixer l'attache sur un conduit de câbles ou un caniveau de câbles (18),
**caractérisée en ce qu'**au moins un élément (20 ; 120 ; 220) de guidage ou de fixation est formé sur le côté intérieur du cache avant (12 ; 112) pour recevoir un cache latéral séparé (22 ; 122 ; 222).

2. Attache selon la revendication 1, **caractérisée en ce que** deux éléments (20 ; 120 ; 220) de guidage ou de fixation sont disposés symétriquement sur le côté intérieur du cache avant (12 ; 112), éléments dans lesquels le cache latéral séparé (22 ; 122 ; 222) peut être alternativement installé pour une terminaison à gauche ou à droite d'un tronçon de caniveau de câbles.

3. Attache selon la revendication 1 ou 2, **caractérisée en ce qu'**une nervure rétrécie (32 ; 132 ; 232) de guidage ou de fixation est formée à l'extrémité de tête du cache latéral (22 ; 122 ; 222).

4. Attache selon l'une des revendications 1 à 3, **caractérisée en ce que** le cache latéral (22 ; 122 ; 222) est assemblé par collage, soudage, brasage, encliquetage, vissage ou serrage au cache avant (12 ; 112) au niveau de l'élément (20 ; 120 ; 220) de guidage ou de fixation.

5. Attache selon l'une des revendications 1 à 4, **caractérisée en ce que** les éléments (20 ; 120 ; 220) de guidage ou de fixation sont constitués d'une paroi double avec une rainure centrale (24 ; 124).

6. Attache selon l'une des revendications 4 ou 5, **caractérisée en ce que** la nervure (132) de guidage ou de fixation possède un profil de maintien trapézoïdal, et la rainure (124) est contre-dépouillée en forme de trapèze sur le côté arrière.

7. Attache selon la revendication 6, **caractérisée en ce que** des ergots (28, 30) sont formés sur le côté intérieur du cache avant (12; 112), qui coopèrent en engagement positif avec des ouvertures ajustées (36, 38) sur le dessous du cache latéral (22 ; 122 ; 222).

8. Attache selon la revendication 7, **caractérisée en ce que** les ergots (28, 30) sont formés en deux rangées, de sorte que le cache latéral (22 ; 122 ; 222) peut être utilisé alternativement pour une terminaison à gauche ou à droite d'un tronçon de caniveau de câbles.

9. Attache selon l'une des revendications 1 à 8, **caractérisée en ce que** le cache avant (12 ; 112) comprend à l'extrémité de tête une calotte recourbée (26).

10. Attache selon l'une des revendications 1 à 9, **caractérisée en ce que** le cache latéral (22 ; 122 ; 222) est pourvu d'une couche réfléchissante sur au moins un côté.

11. Caniveau de câbles, comprenant une partie inférieure et une partie supérieure, **caractérisé en ce qu'**une attache selon l'une des revendications 1 à 10 est mise en place pour masquer les bords de coupe de tronçons de caniveau de câbles qui se touchent et/ou à leurs extrémités.
